(19) Europäisches Patentamt / European Patent Office / Office européen des brevets

(11) **EP 4 414 070 B1**

(12) **EUROPEAN PATENT SPECIFICATION**

(45) Date of publication and mention
of the grant of the patent:
**03.12.2025   Bulletin 2025/49**

(21) Application number: **22886010.2**

(22) Date of filing: **26.10.2022**

(51) International Patent Classification (IPC):
**B01J 23/78** (2006.01)    **B01J 21/12** (2006.01)
**B01D 53/48** (2006.01)

(52) Cooperative Patent Classification (CPC):
**C10L 3/10; B01D 53/8606; B01J 21/04;**
**B01J 23/755; B01J 23/78; B01J 35/615;**
**B01J 35/635; B01J 35/651; B01J 37/0203;**
**B01J 37/0207; C01B 17/16;** B01D 53/52;
B01D 2255/2022; B01D 2255/2027;
B01D 2255/20753;                    (Cont.)

(86) International application number:
**PCT/CN2022/127628**

(87) International publication number:
**WO 2023/072134 (04.05.2023 Gazette 2023/18)**

(54) **CATALYST AND USE FOR REMOVING CARBONYL SULFIDE IN NATURAL GAS**

KATALYSATOR UND ANWENDUNG ZUR ENTFERNUNG VON CARBONYLSULFID AUS ERDGAS

CATALYSEUR ET UTILISATION POUR L'ÉLIMINATION DU SULFURE DE CARBONYLE DANS LE GAZ NATUREL

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority:  **26.10.2021   CN 202111250608**

(43) Date of publication of application:
**14.08.2024   Bulletin 2024/33**

(73) Proprietors:
• **China Petroleum & Chemical Corporation**
  **Beijing 100728 (CN)**
• **SINOPEC QILU BRANCH COMPANY**
  **Shandong 255400 (CN)**

(72) Inventors:
• **LIU, Jianli**
  **Zibo, Shandong 255400 (CN)**
• **LIU, Zengrang**
  **Zibo, Shandong 255400 (CN)**
• **XU, Cuicui**
  **Zibo, Shandong 255400 (CN)**
• **LIU, Aihua**
  **Zibo, Shandong 255400 (CN)**
• **YUAN, Huizhi**
  **Zibo, Shandong 255400 (CN)**
• **TAO, Weidong**
  **Zibo, Shandong 255400 (CN)**
• **SONG, Wanlin**
  **Zibo, Shandong 255400 (CN)**
• **CHANG, Wenzhi**
  **Zibo, Shandong 255400 (CN)**

(74) Representative: **Hoffmann Eitle**
**Patent- und Rechtsanwälte PartmbB**
**Arabellastraße 30**
**81925 München (DE)**

(56) References cited:
CN-A- 103 818 939       CN-A- 108 970 618
CN-A- 108 970 618       US-A- 4 153 674
US-A1- 2011 014 105

• **WANG CHI: "COS, CS2 Catalytic Hydrolysis**
**Technology and Equipment", TYPICAL TOXIC**
**AND HAZARDOUS GAS PURIFICATION**
**TECHNOLOGIES, 31 March 2019 (2019-03-31),**
**XP009545765**

EP 4 414 070 B1

(52) Cooperative Patent Classification (CPC): (Cont.)
B01D 2255/9205; B01D 2255/9207;
B01D 2256/245; B01D 2257/304; B01D 2257/308;
B01J 35/51; B01J 2235/15; Y02P 20/52

2

**Description**

**FIELD**

The present disclosure relates to the technical field of desulfurization, particularly to a catalyst and a use, and a method for removing carbonyl sulfide in natural gas.

**BACKGROUND**

Natural gas is a high-quality, efficient, and clean fossil energy source, its share in the world's primary energy consumption structures has reached about 25%, and it has emerged as an important energy source. Some new and large-scale high-sulfur gas fields have been developed in China in recent years, which have imposed new requirements on the natural gas purification process. The newly implemented national standard GB17820-2018 "Natural gas" of China stipulates that the total content of sulfur (calculated in terms of sulfur) in the gas of category I shall be lower than or equal to $20mg/m^3$, and the hydrogen sulfide content is lower than or equal to $6mg/m^3$, the standard imposes higher requirements on the natural gas desulfurization technologies.

Because of the high organic sulfur (primarily carbonyl sulfide or COS) content in natural gas, a separate COS hydrolysis reaction unit is generally arranged in front of the Claus Unit. The Puguang Natural Gas Purification Plant of the Sinopec Group has arranged a COS hydrolysis unit in front of the sulfur recovery unit, in order to reduce the content of organic sulfur in the natural gas. Given that the natural gas contains a certain amount of carbon dioxide, the presence of carbon dioxide would impose a slightly inhibitive function on the COS hydrolysis reaction, which requires high activity of the COS conversion catalyst in the natural gas sulfur recovery unit, otherwise it cannot satisfy the desulfurization requirement.

CN1069673A discloses a normal temperature organic sulphur hydrolysis catalyst consisting of potassium-containing compound and a carrier, wherein the content of $K_2CO_3$ is 2wt%-25wt% of the carrier, the carrier is selected from spheroidal $\gamma$-$Al_2O_3$, and shall meet the following requirements: the spheroidal diameter is within the range of 2-8mm; the water absorption rate is within the range of 0.35-0.65mL/g; the specific surface area is from $150m^2/g$ to $350m^2/g$; and the mechanical strength is larger than 30N/piece. The COS conversion rate of the catalyst is not high, both the COS content and space velocity of the feedstock gas to be treated are relatively low, which are $1-5mg/m^3$ and $2,000h^{-1}$, respectively. CN108970618B discloses a sulfur recovery catalyst and its preparation method. The sulfur recovery catalyst is prepared by using alumina loaded with potassium and calcium as the carrier and nickel oxide as the active component. The preparation method steps are as follows: (1) mixing aluminum hydroxide fast powder removal, alkaline earth metal calcium, alkaline earth metal potassium with a binder, rolling ball forming, curing, drying, and calcination to obtain the catalyst carrier; (2) The catalyst carrier is impregnated with soluble nickel salt solution using the equal volume impregnation method, dried, and calcined to obtain the catalyst product. This sulfur recovery catalyst has high Claus activity and organic sulfur hydrolysis activity.

US4511668A discloses a COS hydrolysis catalyst containing $TiO_2$ as a carrier, and at least one of an alkali metal, an alkaline earth metal, group IIB metal, and group IVA metal as an active component, the COS conversion rate of the catalyst is not high, and the reaction temperature is relatively high (within the range of 200-400°C), and titanium oxide is used as a carrier, the preparation costs are high, and the catalyst suffers from a large abrasion. US2011/0014105A1 discloses a particulate desulphurization material includes one or more nickel compounds, a zinc oxide support material, and one or more alkali metal compounds wherein the nickel content of the material is in the range 0.3 to 10% by weight and the alkali metal content of the material is in the range 0.2 to 10% by weight. A method of making the desulphurization material includes the steps: (i) contacting a nickel compound with a particulate zinc support material and an alkali metal compound to form an alkali-doped composition, (ii) shaping the alkali-doped composition, and (iii) drying ,calcining,and optionally reducing the resulting material. The desulphurization material may be used to desulphurize hydrocarbon gas streams with reduced levels of hydrocarbon hydrogenolysis.

As can be seen, the COS conversion rate of the catalysts in the prior art is not desirable, and the desulfurization effect is ordinary, thus it is urgent to develop a novel organosulfur conversion catalyst to solve the aforementioned problems.

**SUMMARY**

The present disclosure aims to address the problems in the prior art that the organic sulfur conversion catalysts have unsatisfactory catalytic activity and COS conversion rate, the reaction temperature is high, and activity stability is poor, and provides a catalyst, a preparation method, and a use thereof.

In order to achieve the above objects, the first aspect of the present disclosure provides a catalyst comprising a carrier, and an alkali metal oxide and nickel oxide which are loaded on the carrier; wherein the content of the carrier is within the range of 90-97wt%, the content of the alkali metal oxide is within the range of 2-6wt%, and the content of the nickel oxide is within the range of 1-4wt%, based on the total weight of the catalyst; at least part of the carrier is AlO(OH), $\chi$-$Al_2O_3$ and $\eta$-$Al_2O_3$ phases; wherein the weight ratio of AlO(OH): $\chi$-$Al_2O_3$: $\eta$-$Al_2O_3$ in the carrier is 1: (2-5): (0.2-0.6).

In the second aspect, the present disclosure provides a use of the catalyst according to the first aspect in removing the carbonyl sulfide.

In the third aspect, the present disclosure provides a method for removing carbonyl sulfide in natural gas comprising: contacting the raw natural gas with a desulfurizer and carrying out a reaction, then performing a separation to obtain the product natural gas and $H_2S$;

wherein the desulfurizer is the catalyst according to the first aspect;

the reaction conditions comprise an hourly volumetric space velocity of the raw natural gas within the range of 1,000-5,000$h^{-1}$ and a reaction temperature within the range of 100-140°C.

Due to the technical scheme, the present disclosure produces the following favorable effects:

(1) The catalyst provided by the present disclosure has the advantages of high catalytic activity, good activity stability, long service life and low reaction temperature, and can achieve a COS conversion rate of higher than or equal to 99%, an operating temperature within the range of 100-140°C, and service life of 8 years or above, whereas the catalyst of the prior art generally has a COS conversion rate not higher than 99% and a service life not exceeding 6 years;

(2) The catalyst can be used in an organic sulfur conversion facility of the natural gas purification plant, it can significantly increase the organic sulfur conversion rate of the facility, and effectively reduce the total sulfur content of the product natural gas;

(3) The preparation process is simple, and the preparation process is free of secondary pollution.

## BRIEF DESCRIPTION OF THE DRAWINGS

The accompanying drawings serve to facilitate further comprehension of the present disclosure, and constitute a part of the description; the accompanying drawings and the detailed description described below are jointly used for explaining the present disclosure, instead of imposing limitations thereto. In the accompanying drawings,

FIG. 1 illustrates an XRD (X-ray diffraction) pattern of the catalyst prepared in Example 1 of the present disclosure.

FIG. 2 is a pore size distribution test chart (mercury intrusion method) of the catalyst prepared in Example 1 of the present disclosure.

FIG. 3 is a pore size distribution test chart (mercury intrusion method) of the catalyst prepared in Comparative Example 6 of the present disclosure.

FIG. 4 illustrates a process flow diagram of the COS conversion tests in Examples of the present disclosure.

## DESCRIPTION OF THE REFERENCE SIGNS

1. $CH_4$, $C_2H_6$ gas cylinder
2. $H_2$ gas cylinder
3. $H_2S$ gas cylinder
4. Methyl mercaptan gas cylinder
5. COS gas cylinder
6. $CO_2$ gas cylinder
7. Water bottle
8. Mass flow meter
9. Pump
10. Buffer tank
11. Reactor
12. Sulfur collector
13. Cold trap
14. Alkaline washing tank
15. Chromatogram
16. Tail gas

## DETAILED DESCRIPTION

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point value of the various ranges, and the individual point values may be combined with one another to produce one or more new numerical ranges, which should be deemed have been specifically disclosed herein.

The detailed description of the present disclosure will be described below in detail. It should be understood that the detailed description described herein merely serve to illustrate and explain the present disclosure, instead of imposing limitations thereto.

The first aspect of the present disclosure provides a catalyst comprising a carrier, and an alkali metal oxide and nickel oxide which are loaded on the carrier; wherein the content of the carrier is within the range of 90-97wt%, the content of the alkali metal oxide is within the range of 2-6wt%, and the content of the nickel oxide is within the range of 1-4wt%, based on the total weight of the catalyst; at least part of the carrier is AlO(OH), $\chi$-$Al_2O_3$ and $\eta$-$Al_2O_3$ phases; wherein the weight ratio of AlO(OH): $\chi$-$Al_2O_3$: $\eta$-$Al_2O_3$ in the carrier is 1: (2-5): (0.2-0.6).

According to the present disclosure, the components of the catalyst satisfy the above-mentioned quantitative relationship, in order to achieve the advantages of better catalytic activity, activity stability, and service life, preferably, the content of the carrier may be within the range of 93-95wt%, the content of the alkali metal oxide may be within the range of 3-4wt%, and the content of the nickel oxide may be within the range of 2-3wt%, based on the total weight of the catalyst.

According to the present disclosure, both an alkali metal oxide and nickel oxide are loaded on the carrier of the catalyst, wherein the alkali metal oxide is preferably an oxide of sodium and/or an oxide of potassium.

According to the present disclosure, the content of the alkali metal oxide in the catalyst is preferably higher than the content of the nickel oxide, more preferably, the content of the alkali metal oxide is 0.5-3wt% higher than the content of the nickel oxide.

According to the present disclosure, the catalyst has a specific phase composition, in particular, the specific phase composition of the catalyst are derived from a carrier contained in the catalyst, at least part of the carrier is AlO(OH), $\chi$-$Al_2O_3$ and $\eta$-$Al_2O_3$ phases, and in the XRD test pattern of the catalyst, the characteristic diffraction peaks of AlO(OH) are shown at $2\theta$ of 14.44°, 28.24°, 38.24° and 48.80°, the characteristic diffraction peaks of $\eta$-$Al_2O_3$ are shown at $2\theta$ of 37.31°, 45.93° and 66.76°, the characteristic diffraction peaks of $\chi$-$Al_2O_3$ are shown at $2\theta$ of 37.31°, 42.41°, 45.56° and 67.50°, the characteristic diffraction peaks of $\gamma$-$Al_2O_3$ are not shown at $2\theta$ of 37.80°, 45.90° and 67.00°, indicating that the catalyst comprises AlO(OH), $\chi$-$Al_2O_3$ and $\eta$-$Al_2O_3$ phases, and is essentially free of $\gamma$-$Al_2O_3$. In the carrier of the catalyst, the weight ratio of AlO(OH): $\chi$-$Al_2O_3$: $\eta$-$Al_2O_3$ is 1: (2-5): (0.2-0.6), preferably 1: (3-4): (0.4-0.5).

According to the present disclosure, the content of $\gamma$-$Al_2O_3$ in the catalyst is not more than 0.5wt%, and the total content of AlO(OH), $\chi$-$Al_2O_3$ and $\eta$-$Al_2O_3$ is not less than 90wt%, based on the total weight of the catalyst.

In the present disclosure, the contents of AlO(OH), $\chi$-$Al_2O_3$ and $\eta$-$Al_2O_3$ are calculated based on the peak areas of the characteristic diffraction peaks described above.

According to the present disclosure, the catalyst has the specified composition of material phases, and the content of phases, it is conducive to achieving better catalytic activity, activity stability, and service life.

According to the present disclosure, the catalyst has a high specific surface area and a large pore volume, preferably, the catalyst has a specific surface area of more than 300m²/g and a pore volume of more than 0.45mL/g, and it can promote better catalytic activity, activity stability and service life.

In the present disclosure, the specific surface area is measured by the nitrogen adsorption method, and the pore volume is measured by the mercury intrusion method.

According to the present disclosure, the catalyst has a high content of weakly alkaline centers, preferably, a content of weakly alkaline centers from 2.15 to 2.3mmol $CO_2$/g catalyst, such a content can bring about a desirable catalytic activity.

In the present disclosure, the content of weakly alkaline centers is measured by using the carbon dioxide temperature programmed desorption method ($CO_2$-TPD) on the amount of $CO_2$ with the desorption temperature below 200°C in the $CO_2$-TPD pattern obtained by testing the catalyst.

According to the present disclosure, the catalyst has a bimodal distribution of pore diameters in a pore structure of the catalyst measured by the mercury intrusion method, and bimodal peak positions are located at 1,000-4,000nm and 4-20nm, respectively. Further, the catalyst has a high content of macropores, in the pore structure of the catalyst measured by the mercury intrusion method, and a sum of pore volumes of pores having a pore diameter of larger than 75nm is 35vol% or more, based on a total of pore volumes of the catalyst, which can result in a better catalytic activity, activity stability and service life.

In the present disclosure, "a sum of pore volumes of pores having a pore diameter of larger than 75nm" is obtained by dividing the sum of the pore volumes of pores having a pore diameter of larger than 75nm in the pore structure data obtained by the mercury intrusion method by the total volume of all pores.

According to the present disclosure, preferably, in the pore structure of the catalyst measured by the mercury intrusion method, a sum of pore volumes of pores having a pore diameter of larger than 75nm is within the range of 35-60vol%, based on a total of pore volumes of the catalyst.

In the present disclosure, when the catalyst provided in the present disclosure contains the specific contents of alkali metal oxide and nickel oxide and the carriers consisting of specific phases, the components can produce a synergistic effect, resulting in significant performance improvement of the catalyst, such that the catalyst has the characteristics of high catalytic activity, good activity stability, long service life, and low reaction temperature, and the COS conversion rate is higher than or equal to 99%, thereby significantly reducing the total sulfur content in the natural gas. When the contents of alkali metal oxide and nickel oxide and the composition of the carrier go beyond the aforementioned definition scopes, the obtained catalyst cannot exhibit the comprehensive properties of the catalyst provided in the present disclosure with respect to the catalytic activity, activity stability, and service life.

According to the present disclosure, the carrier of the catalyst is prepared by processing the aluminium hydroxide quick powder, followed by loading an alkali metal-containing salt and a nickel salt, and finally performing calcination to produce the catalyst. Preferably, the catalyst provided by the present disclosure can be prepared with a process, wherein the process comprises the following steps:

(1) mixing the aluminium hydroxide quick powder and a pore-enlarging agent to form a solid material;
(2) co-forming the solid material with a binder-containing solution, and sequentially curing, drying and calcining the formed product to obtain a carrier;
(3) loading the carrier with an alkali metal-containing salt and a nickel salt, followed by drying and calcining the carrier in sequence to prepare a catalyst.

According to the present disclosure, the aluminium hydroxide quick powder in step (1) preferably has a specific surface area of more than $250m^2/g$ and a pore volume of more than 0.25mL/g; further preferably, the aluminium hydroxide quick powder has a specific surface area of more than $300m^2/g$ and a pore volume of more than 0.35mL/g, which is advantageous for obtaining better carrier properties and catalyst activity.

According to the present disclosure, the pore-enlarging agent in step (1) may be selected from the group consisting of sesbania powder, methylcellulose or starch, preferably sesbania powder. During the subsequent calcining process to produce the carrier, the pore-enlarging agent will be completely decomposed, and the resulting catalyst is believed to be free of the components of the pore-enlarging agent.

According to the present disclosure, the aluminium hydroxide quick powder in step (1) is used in an amount such that the carrier content is 90-97wt%, preferably 93-95wt%, based on the total weight of the catalyst. The pore-enlarging agent is used in an amount of 1-5wt%, preferably 2-4wt%, based on the total weight of the catalyst.

According to the present disclosure, the mixing process in step (1) is not particularly limited, as long as the aluminium hydroxide quick powder and the pore-enlarging agent are uniformly blended, in order to obtain a uniform solid material that meets the requirements of forming process.

According to the present disclosure, the binder-containing solution in step (2) is preferably an aqueous binder solution, as long as it can satisfy the conditions of the effective binding and forming between the particles of the solid material. The present disclosure does not particularly limit the concentration of the binder in the solution, and the concentration can be adjusted and selected according to the requirements of the forming process. The binder may be selected from acetic acid, nitric acid or citric acid, preferably acetic acid. The binder will be completely decomposed during the subsequent calcining process to prepare the carrier, and it can be considered that the finally produced catalyst does not contain the binder component.

In the present disclosure, the binder is used in an amount of 1-3wt%, preferably 1.5-2.5wt%, based on the total weight of the catalyst.

According to the present disclosure, the forming process in step (2) may be performed with a roll forming method, and may be performed with a conventional process and equipment; the forming process comprises feeding the solid material into a extrusion-spheronization device while spraying the binder-containing solution onto the material in the extrusion-spheronization device, mixing and continuously rolling to obtain a spheroidal product.

According to the present disclosure, the curing in step (2) is preferably carried out under a water vapor atmosphere, the curing conditions comprise a temperature within the range of 60-100°C, preferably 80-90°C, and a time within the range of 10-30h, preferably 16-24h.

According to the present disclosure, the drying conditions in step (2) include a temperature within the range of 100-150°C, preferably 120-130°C, and a time within the range of 4-10h, preferably 5-8h.

According to the present disclosure, the calcining conditions in step (2) include a temperature within the range of 380-550°C, preferably 400-450°C, and a time within the range of 3-10h, preferably 4-6h.

According to the present disclosure, the calcining process in step (2) is carried out under a protective atmosphere of inert gas. The inert protective gas may be nitrogen gas, helium gas, argon gas or other inert gas, preferably nitrogen gas.

According to the present disclosure, by using the aluminium hydroxide quick powder having a specific pore structure and calcining at a relatively low temperature, the calcined product mainly contains $AlO(OH)$, $\chi\text{-}Al_2O_3$ and $\eta\text{-}Al_2O_3$ phases, and the weight ratio of $AlO(OH)$: $\chi\text{-}Al_2O_3$: $\eta\text{-}Al_2O_3$ is 1: (2-5): (0.2-0.6), preferably 1: (3-4): (0.4-0.5), and is substantially free of $\gamma\text{-}Al_2O_3$, and wherein the content of the macropores is high, and in the pore structure of the catalyst obtained after loading with an active component measured by the mercury intrusion method, a sum of pore volumes of pores having a pore diameter of larger than 75nm is not lower than 35vol%, based on a total of pore volumes of the catalyst, such that the catalyst has a high activity of removing carbonyl sulfide and high stability, and the service life of the catalyst is greatly improved.

According to the present disclosure, loading the carrier with an alkali metal-containing salt and a nickel salt in step (3) may be performed by impregnating the carrier in an impregnation liquid containing the above-mentioned salts. The present disclosure does not impose specific limitations on the impregnation process, which may be a conventional impregnation method in the art, such as one-step impregnation or multi-step impregnation. When the one-step impregnation is adopted, the impregnation liquid is a solution of an alkali metal-containing salt and a nickel salt; and when the multi-step impregnation is adopted, the impregnation liquid can be a solution of an alkali metal-containing salt and a solution of a nickel salt, respectively, and the carrier is impregnated in a solution of alkali metal-containing salt and a solution of a nickel salt sequentially, and the present disclosure does not particularly limit the order of impregnating the carrier in the different impregnation liquids. The impregnation liquid can be obtained by dissolving the alkali metal-containing salt and/or the nickel salt in a solvent. The alkali metal-containing salt can preferably be a carbonate and/or nitrate of an alkali metal, the nickel salt is preferably at least one selected from the group consisting of nickel nitrate, nickel carbonate and nickel acetate, the alkali metal is preferably sodium and/or potassium, and the solvent is preferably water.

According to the present disclosure, the alkali metal-containing salt in the impregnation solution is used in an amount such that the content of the alkali metal oxide loaded on the carrier is 2-6wt%, preferably 3-4wt%, based on the total weight of the catalyst; the nickel salt is used in an amount such that the content of the nickel oxide loaded on the carrier is 1-4wt%, preferably 2-3wt%, based on the total weight of the catalyst; the alkali metal-containing salt and nickel salt are used in such an amount that the content of the alkali metal oxide in the catalyst is higher than the content of the nickel oxide, preferably, the content of the alkali metal oxide is 0.5-3wt% higher than the content of the nickel oxide.

According to the present disclosure, the impregnation in step (3) may be conducted under a normal temperature, and the impregnation time is preferably from 1 to 4 hours, further preferably from 2 to 3 hours.

According to the present disclosure, the carrier after completion of the impregnation is subjected to drying in step (3), the drying conditions include a temperature within the range of 100-160°C, preferably 120-140°C, and a time within the range of 2-8h, preferably 4-6h.

According to the present disclosure, the carrier after completion of drying is subjected to calcining in step (3), to obtain the COS conversion catalyst. Preferably, the calcination conditions comprise a temperature within the range of 360-600°C, preferably 400-500°C, and a time within the range of 3-8h, preferably 3-5h.

The catalyst prepared by the above process, wherein at least part of the carrier is $AlO(OH)$, $\chi\text{-}Al_2O_3$ and $\eta\text{-}Al_2O_3$ phases; the content of $\gamma\text{-}Al_2O_3$ is not more than 0.5wt%, and a total content of $AlO(OH)$, $\chi\text{-}Al_2O_3$ and $\eta\text{-}Al_2O_3$ is not less than 90wt%, based on the total weight of the catalyst; wherein the weight ratio of $AlO(OH)$: $\chi\text{-}Al_2O_3$: $\eta\text{-}Al_2O_3$ is 1: (2-5): (0.2-0.6); both the alkali metal oxide and the nickel oxide are supported on the carriers; the content of the carrier is 90-97wt%, the content of the alkali metal oxide is 2-6wt%, and the content of the nickel oxide is 1-4wt%, based on the total weight of the catalyst; preferably, the content of the alkali metal oxide in the catalyst is higher than the content of the nickel oxide; the catalyst has a specific surface area of more than $300m^2/g$ and a pore volume of more than 0.45mL/g; the catalyst has a content of weakly alkaline centers from 2.15 to 2.3mmol $CO_2/g$ catalyst; in the pore structure of the catalyst measured by the mercury intrusion method, the pore diameters exhibit a bimodal distribution, and bimodal peak positions are located at 1,000-4,000nm and 4-20nm, respectively; a sum of pore volumes of pores having a pore diameter of larger than 75nm is 35vol% or more, based on a total of pore volumes of the catalyst. The catalyst has the advantages of high catalytic activity, good activity stability, long service life and low reaction temperature, and can achieve a COS conversion rate of greater than or equal to 99% and a service life of 8 years or above.

The second aspect of the present disclosure provides a use of the catalyst according to the first aspect in removing the carbonyl sulfide.

In the present disclosure, the catalyst has a specific content of alkali metal oxide and nickel oxide, and a carrier containing a specific phase, and has a high specific surface area and a large pore volume, can efficiently convert carbonyl sulfide, has the advantages of high catalytic activity, good activity stability, low service temperature and long service life, thus the catalyst is applied in widespread fields, can be used for removing carbonyl sulfide in many industries including but not limited to natural gas chemical, coal chemical, etc.

The third aspect of the present disclosure provides a method for removing carbonyl sulfide in natural gas comprising: contacting the raw natural gas with a desulfurizer and carrying out a reaction, then performing a separation to obtain the product natural gas and $H_2S$;

wherein the desulfurizer is the catalyst according to the aforementioned first aspect;
The reaction conditions comprise an hourly volumetric space velocity of the raw natural gas within the range of 1,000-5,000h$^{-1}$ and a reaction temperature within the range of 100-140°C.

In the present disclosure, the raw natural gas refers to a natural gas that is subjected to a desulfurization process, and the product natural gas refers to a natural gas that has a desired sulfur content meeting the use requirements after the desulfurization process. The raw natural gas mainly contains methane, small amounts of ethane and other alkanes, carbon dioxide, carbon monoxide, nitrogen gas, hydrogen gas, hydrogen sulfide, water vapor, organic sulfur, and the like, wherein the organic sulfur mainly contains carbonyl sulfide (COS, its content in the raw natural gas is within the range of 20-600mg/m$^3$). The method of the present disclosure can efficiently convert carbonyl sulfide, the conversion reaction has a desirable stability, the catalyst has a long service life and a low reaction temperature, the conversion rate of carbonyl sulfide may reach 99% or higher, thereby significantly reducing the total sulfur content in the product natural gas gained after the desulfurization. Preferably, the total sulfur content in the product natural gas gained after the desulfurization is lower than or equal to 20mg/m$^3$.

The present disclosure will be described below in detail with reference to examples. Unless otherwise specified in the Examples and Comparative Examples below, each of the materials in use is the commercially available ordinary product. In the following Examples,
The aluminium hydroxide quick powder was purchased from Kaiou Zibo Chemical Co., Ltd.

Example 1

(1) 1,343g of aluminium hydroxide quick powder (with a specific surface area of 350m$^2$/g and a pore volume of 0.60mL/g) and 30g of sesbania powder were mixed uniformly to form a solid material;
(2) 15g of acetic acid was added into 80g of water and stirred uniformly to prepare an acetic acid solution; the solid material obtained in step (1) was placed in a extrusion-spheronization device, and the acetic acid solution was sprayed on the solid material in the extrusion-spheronization device, mixed and rotated to perform the rolling ball forming, to obtain spherules with a diameter Φ of 3-4mm; the spherules were sequentially cured for 20h under a water vapor atmosphere at 90°C, then dried at 130°C for 5h, and calcined at 400°C under a nitrogen gas atmosphere for 6h to obtain a carrier;
(3) 58.7g of potassium carbonate and 49.0g of nickel nitrate were loaded on the carrier prepared in step (2) by using an equal volume impregnation method, the impregnation time was 2.5h; the impregnated carrier was dried at 130°C for 4h, and then calcined at 400°C for 5h to prepare a catalyst (denoted as S1).

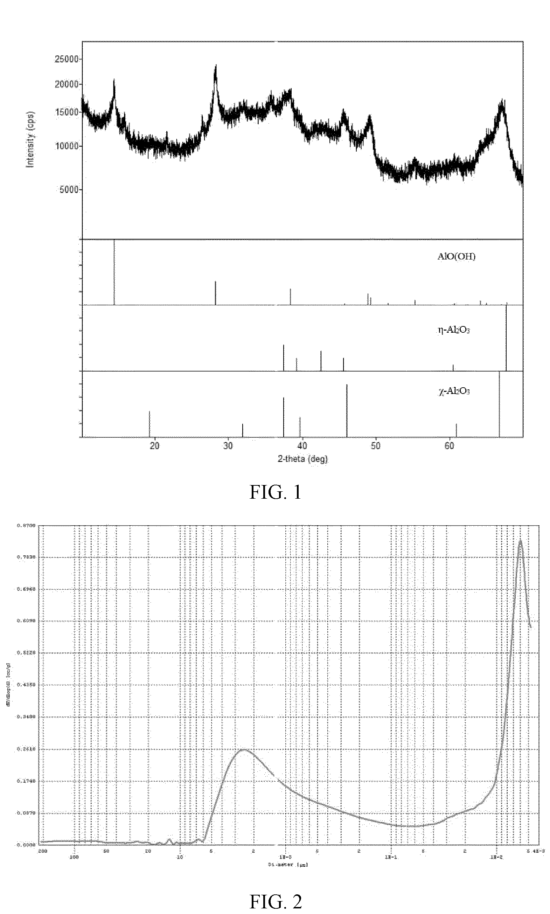

The catalyst S1 was subjected to an XRD test (with the Smartlab-3 type X-ray diffractometer manufactured by the Rigaku Corporation in Japan, the one-dimensional detector was used, the test parameters were as follows: tube pressure 40kV, tube current 40μA, Cu target, light path slit system IS=0.5°, RS1=20mm, RS2=20mm, scan speed=10(d·min$^{-1}$), scan range from 10° to 70°), the test results were shown in FIG. 1, the characteristic diffraction peaks of AlO(OH) were shown at 2θ of 14.44°, 28.24°, 38.24° and 48.80°, the characteristic diffraction peaks of η-Al$_2$O$_3$ were shown at 2θ of 37.31°, 45.93° and 66.76°, the characteristic diffraction peaks of χ-Al$_2$O$_3$ were shown at 2θ of 37.31°, 42.41°, 45.56° and 67.50°, the characteristic diffraction peaks of γ-Al$_2$O$_3$ were not shown at 2θ of 37.80°, 45.90° and 67.00°; further, based on the calculation of the peak areas of the characteristic diffraction peaks of the test samples, the weight ratio of AlO(OH): χ-Al$_2$O$_3$: η-Al$_2$O$_3$ was 1: 3.5: 0.45; the content of γ-Al$_2$O$_3$ was 0.01wt%, and the total content of AlO(OH), χ-Al$_2$O$_3$ and η-Al$_2$O$_3$ was 94wt%, based on the total weight of the catalyst S1.

The pore structure testing of the catalyst S1 was conducted by using the mercury intrusion method (with the PoreMaster-60 type full-automatic mercury porosimeter manufactured by the Quantachrome Instruments Corporation in the United States of America, the measured pore diameter range was from 0.003μm to 1,000μm, the low-pressure analysis pressure was within the range of 1.5-350kPa, and the high-pressure analysis pressure was within the range of 140-420kPa), the results indicated that a sum of pore volumes of pores having a pore diameter of larger than 75nm was 48vol% based on a total of pore volumes of the catalyst, the pore size distribution was shown in FIG. 2, the pore diameters exhibited the bimodal distribution, and the bimodal peak positions were located at 1,000-4,000nm and 4-20nm, respectively.

The catalyst S1 had a specific surface area of 314m$^2$·g$^{-1}$ measured by the nitrogen adsorption method and a pore volume of 0.53mL·g$^{-1}$ measured by the mercury intrusion method.

The content of weakly alkaline centers of the catalyst was measured by using the carbon dioxide temperature programmed desorption method (CO$_2$-TPD), the test procedure was as follows: 250mg of catalyst sample was weighted, the catalyst was subjected to a pre-treatment through the temperature rise to 300°C under the purging with the high-purity nitrogen gas (the flow rate was 30mL/min), the temperature was maintained at 300°C for 20min, then cooled to 30°C, the gas was switched to $CO_2$ (with a flow rate of 30mL/min and a concentration of 99.999%) and the adsorption was performed for 30min, the nitrogen gas purging was implemented for 15min after completion of the adsorption process, the desorption was performed during the heating process to 700°C with a temperature rise rate maintained at 10°C/min. The variation trend of $CO_2$ (m/z=44) was recorded by using a mass spectrometer during the heating process, the $CO_2$-TPD pattern was obtained. The content of weakly alkaline centers of the catalyst S1 was calculated as 2.25mmol $CO_2$/g catalyst based on the amount of $CO_2$ with desorption temperature below 200°C.

The content of components, the composition of contained phases, and the physicochemical indicators of the catalyst S1 were shown in Table 1.

Example 2

(1) 1,357g of aluminium hydroxide quick powder (with a specific surface area of 360m$^2$/g and a pore volume of 0.65mL/g) and 40g of sesbania powder were mixed uniformly to form a solid material;

(2) 20g of acetic acid was added into 90g of water and stirred uniformly to prepare an acetic acid solution; the solid material obtained in step (1) was placed in a extrusion-spheronization device, and the acetic acid solution was sprayed on the solid material in the extrusion-spheronization device, mixed and rotated to perform the rolling ball forming, to obtain spherules with a diameter Φ of 3-4 mm; the spherules were sequentially cured for 16h under a water vapor atmosphere at 85°C, then dried at 125°C for 8h, and calcined at 430°C under a nitrogen gas atmosphere for 5h to obtain a carrier;

(3) 51.3g of sodium carbonate and 31.9g of nickel carbonate were loaded on the carrier prepared in step (2) by using an equal volume impregnation method, the impregnation time was 3h; the impregnated carrier was dried at 120°C for 5h, and then calcined at 500°C for 3h to prepare a catalyst (denoted as S2).

The content of components, the composition of contained phases, and the physicochemical indicators of the catalyst S2 were shown in Table 1.

Example 3

(1) 1,329g of aluminium hydroxide quick powder (with a specific surface area of 320m$^2$/g and a pore volume of 0.53mL/g) and 20g of sesbania powder were mixed uniformly to form a solid material;

(2) 25g of acetic acid was added into 90g of water and stirred uniformly to prepare an acetic acid solution; the solid material obtained in step (1) was placed in a extrusion-spheronization device, and the acetic acid solution was sprayed on the solid material in the extrusion-spheronization device, mixed and rotated to perform the rolling ball forming, to obtain spherules with a diameter Φ of 3-4 mm; the spherules were sequentially cured for 24h under a water vapor atmosphere at 80°C, then dried at 120°C for 6h, and calcined at 450°C under a nitrogen gas atmosphere for 4h to obtain a carrier;

(3) 86.0g of potassium nitrate and 100g of nickel acetate tetrahydrate were loaded on the carrier prepared in step (2) by using an equal volume impregnation method, the impregnation time was 2h; the impregnated carrier was dried at 140°C for 6h, and then calcined at 450°C for 4h to prepare a catalyst (denoted as S3).

The content of components, the composition of contained phases, and the physicochemical indicators of the catalyst S3 were shown in Table 1.

Example 4

(1) 1,300g of aluminium hydroxide quick powder (with a specific surface area of 326m$^2$/g and a pore volume of 0.45mL/g) and 20g of methylcellulose were mixed uniformly to form a solid material;

(2) 30g of citric acid was added into 80g of water and stirred uniformly to prepare a citric acid solution; the solid material obtained in step (1) was placed in a extrusion-spheronization device, and the citric acid solution was sprayed on the solid material in the extrusion-spheronization device, mixed and rotated to perform the rolling ball forming, to obtain spherules with a diameter Φ of 3-4 mm; the spherules were sequentially cured for 12h under a water vapor atmosphere at 70°C, then dried at 115°C for 4h, and calcined at 380°C under a nitrogen gas atmosphere for 3h to obtain a carrier; (3) 73.4g of potassium carbonate and 63.7g of nickel carbonate were loaded on the carrier prepared in step (2) by using an equal volume impregnation method, the impregnation time was 4h; the impregnated carrier was dried at 100°C for 2h, and then calcined at 380°C for 6h to prepare a catalyst (denoted as S4).

The content of components, the composition of contained phases, and the physicochemical indicators of the catalyst S4 were shown in Table 1.

Example 5

(1) 1,386g of aluminium hydroxide quick powder (with a specific surface area of $330m^2/g$ and a pore volume of 0.57mL/g) and 50g of starch were mixed uniformly to form a solid material;
(2) 54.8g of acetic acid was added into 100g of water and stirred uniformly to prepare an acetic acid solution; the solid material obtained in step (1) was placed in a extrusion-spheronization device, and the acetic acid solution was sprayed on the solid material in the extrusion-spheronization device, mixed and rotated to perform the rolling ball forming, to obtain spherules with a diameter $\Phi$ of 3-4 mm; the spherules were sequentially cured for 28h under a water vapor atmosphere at 95°C, then dried at 140°C for 10h, and calcined at 520°C under a nitrogen gas atmosphere for 8h to obtain a carrier;
(3) 54.8g of sodium carbonate and 15.9g of nickel carbonate were loaded on the carrier prepared in step (2) by using an equal volume impregnation method, the impregnation time was 1h; the impregnated carrier was dried at 150°C for 5h, and then calcined at 550°C for 8h to prepare a catalyst (denoted as S5).

The content of components, the composition of contained phases, and the physicochemical indicators of the catalyst S5 were shown in Table 1.

Example 6

The catalyst was prepared according to the same method as that of Example 1, except that the carrier was prepared in step (2) at a calcined temperature of 600°C, and the impregnated carrier in step (3) was calcined at a temperature of 580°C. The catalyst (denoted as S6) was prepared.
The content of components, the composition of contained phases, and the physicochemical indicators of the catalyst S6 were shown in Table 1.

Example 7

The catalyst was prepared according to the same method as that of Example 1, except that in step (3), potassium carbonate was used in an amount of 29.4g, and nickel nitrate was used in an amount of 98g. The catalyst (denoted as S7) was prepared.
The content of components, the composition of contained phases, and the physicochemical indicators of the catalyst S7 were shown in Table 1.

Comparative Example 1

The catalyst was prepared according to the same method as that of Example 1, except that the nickel nitrate was not added in step (3), the other conditions were the same as those in Example 1. The catalyst (denoted as D1) was prepared.
The content of components, the composition of contained phases, and the physicochemical indicators of the catalyst D1 were shown in Table 1.

Comparative Example 2

The catalyst was prepared according to the same method as that of Example 2, except that the sodium carbonate was not added in step (3), the other conditions were the same as those in Example 2. The catalyst (denoted as D2) was prepared.
The content of components, the composition of contained phases, and the physicochemical indicators of the catalyst D2 were shown in Table 1.

Comparative Example 3

The catalyst was prepared according to the same method as that of Example 1, except that the metatitanic acid is used for replacing the aluminium hydroxide quick powder in step (1), the other conditions were the same as those in Example 1. The catalyst (denoted as D3) was prepared.

The content of components, the composition of contained phases, and the physicochemical indicators of the catalyst D3 were shown in Table 1.

Comparative Example 4

The catalyst was prepared according to the same method as that of Example 1, except that step (1) was not carried out, 1,200g of $\alpha$-$Al_2O_3$ powder was used for replacing the solid material obtained in step (1), then the steps (2) and (3) were carried out sequentially, the other conditions were the same as those in Example 1. The catalyst (denoted as D4) was prepared.

The content of components, the composition of contained phases, and the physicochemical indicators of the catalyst D4 were shown in Table 1.

Comparative Example 5

The catalyst was prepared according to the same method as that of Example 1, except that in step (1), the used amount of aluminium hydroxide quick powder was adjusted from 1,343g to 1,143g; in addition, "58.7g of potassium carbonate, 49.0g of nickel nitrate" in step (3) were replaced by "278.9g of potassium carbonate, 24.5g nickel nitrate", the other conditions were the same as those in Example 1. The catalyst (denoted as D5) was prepared.

The content of components, the composition of contained phases, and the physicochemical indicators of the catalyst D5 were shown in Table 1.

Comparative Example 6

The catalyst was prepared according to the same method as that of Example 1, except that the calcined temperature in step (2) was changed to 800°C, and the calcined temperature of the impregnated carrier in step (3) was 800°C, the other conditions were the same as those in Example 1. The catalyst (denoted as D6) was prepared.

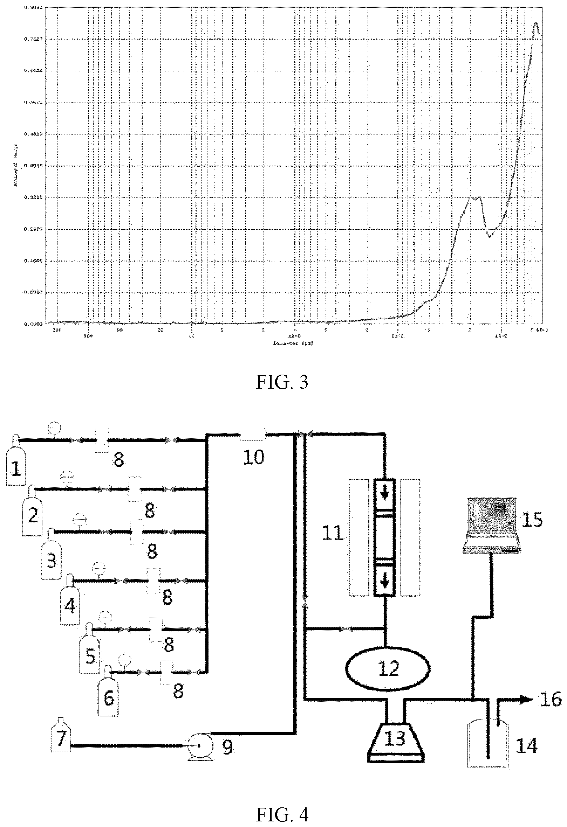

The pore size distribution test (mercury intrusion method) results of the catalyst D6 were shown in FIG. 3. The content of components, the composition of contained phases, and the physicochemical indicators of the catalyst D6 were shown in Table 1.

Table 1

| Catalyst | Carrier /wt% | Alkali metal oxides /wt% | Nickel oxide /wt% | Pore volume /mL·g$^{-1}$ | Specific surface area /m$^2$·g$^{-1}$ | Content of weakly alkaline centers /mmolCO$_2$/g catalyst |
|---|---|---|---|---|---|---|
| S1 | 94 | 4 (potassium oxide) | 2 | 0.53 | 314 | 2.25 |
| S2 | 95 | 3 (sodium oxide) | 2 | 0.52 | 320 | 2.23 |
| S3 | 93 | 4 (potassium oxide) | 3 | 0.52 | 310 | 2.19 |
| S4 | 91 | 5 (potassium oxide) | 4 | 0.51 | 318 | 2.17 |
| S5 | 97 | 2 (sodium oxide) | 1 | 0.50 | 327 | 2.15 |
| S6 | 94 | 4 (potassium oxide) | 2 | 0.49 | 302 | 2.16 |
| S7 | 94 | 2 (potassium oxide) | 4 | 0.51 | 316 | 2.17 |
| D1 | 94 | 6 (potassium oxide) | 0 | 0.50 | 317 | 2.05 |
| D2 | 95 | 0 | 5 | 0.52 | 312 | 2.02 |
| D3 | 94 | 4 (potassium oxide) | 2 | 0.34 | 260 | 1.83 |
| D4 | 94 | 4 (potassium oxide) | 2 | 0.31 | 280 | 0.12 |
| D5 | 80 | 19 (potassium oxide) | 1 | 0.50 | 305 | 2.09 |

(continued)

| Catalyst | Carrier /wt% | Alkali metal oxides /wt% | Nickel oxide /wt% | Pore volume /mL·g$^{-1}$ | Specific surface area /m$^2$·g$^{-1}$ | Content of weakly alkaline centers /mmolCO$_2$/g catalyst |
|---|---|---|---|---|---|---|
| D6 | 94 | 4 (potassium oxide) | 2 | 0.38 | 180 | 2.01 |

Table 1 (continued)

| Catalysts | Composition of phases | Percentage of macropores /vol% |
|---|---|---|
| S1 | The weight ratio of AlO(OH): $\chi$-Al$_2$O$_3$: $\eta$-Al$_2$O$_3$ is 1: 3.5: 0.45; the content of $\gamma$-Al$_2$O$_3$ is 0.01wt%; the total content of AlO(OH), $\chi$-Al$_2$O$_3$ and $\eta$-Al$_2$O$_3$ is 93.99wt% | 48 |
| S2 | The weight ratio of AlO(OH): $\chi$-Al$_2$O$_3$: $\eta$-Al$_2$O$_3$ is 1: 3.9: 0.40; the content of $\gamma$-Al$_2$O$_3$ is 0.05wt%; the total content of AlO(OH), $\chi$-Al$_2$O$_3$ and $\eta$-Al$_2$O$_3$ is 94.95wt% | 50 |
| S3 | The weight ratio of AlO(OH): $\chi$-Al$_2$O$_3$: $\eta$-Al$_2$O$_3$ is 1: 3.7: 0.43; the content of $\gamma$-Al$_2$O$_3$ is 0.12wt%; the total content of AlO(OH), $\chi$-Al$_2$O$_3$ and $\eta$-Al$_2$O$_3$ is 92.88wt% | 43 |
| S4 | The weight ratio of AlO(OH): $\chi$-Al$_2$O$_3$: $\eta$-Al$_2$O$_3$ is 1: 2.8: 0.55; the content of $\gamma$-Al$_2$O$_3$ is 0.01wt%; the total content of AlO(OH), $\chi$-Al$_2$O$_3$ and $\eta$-Al$_2$O$_3$ is 90.99wt% | 40 |
| S5 | The weight ratio of AlO(OH): $\chi$-Al$_2$O$_3$: $\eta$-Al$_2$O$_3$ is 1: 4.6: 0.33; the content of $\gamma$-Al$_2$O$_3$ is 0.3wt%; the total content of AlO(OH), $\chi$-Al$_2$O$_3$ and $\eta$-Al$_2$O$_3$ is 96.7wt% | 45 |
| S6 | The weight ratio of AlO(OH): $\chi$-Al$_2$O$_3$: $\eta$-Al$_2$O$_3$ is 1: 6.0: 0.08; the content of $\gamma$-Al$_2$O$_3$ is 0.5wt%; the total content of AlO(OH), $\chi$-Al$_2$O$_3$ and $\eta$-A$_{12}$O$_3$ is 93.5wt% | 46 |
| S7 | The weight ratio of AlO(OH): $\chi$-Al$_2$O$_3$: $\eta$-Al$_2$O$_3$ is 1: 3.5: 0.45; the content of $\gamma$-Al$_2$O$_3$ is 0.01wt%; the total content of AlO(OH), $\chi$-Al$_2$O$_3$ and $\eta$-Al$_2$O$_3$ is 93.99wt% | 48 |
| D1 | The weight ratio of AlO(OH): $\chi$-Al$_2$O$_3$: $\eta$-Al$_2$O$_3$ is 1: 3.5: 0.45; the content of $\gamma$-Al$_2$O$_3$ is 0.01wt%; the total content of AlO(OH), $\chi$-Al$_2$O$_3$ and $\eta$-Al$_2$O$_3$ is 93.99wt% | 48 |
| D2 | The weight ratio of AlO(OH): $\chi$-Al$_2$O$_3$: $\eta$-Al$_2$O$_3$ is 1: 3.9: 0.40; the content of $\gamma$-Al$_2$O$_3$ is 0.05wt%; the total content of AlO(OH), $\chi$-Al$_2$O$_3$ and $\eta$-Al$_2$O$_3$ is 94.95wt% | 50 |
| D3 | Titanium oxide | 0 |
| D4 | $\alpha$-Al$_2$O$_3$ | 0 |
| D5 | The weight ratio of AlO(OH): $\chi$-Al$_2$O$_3$: $\eta$-Al$_2$O$_3$ is 1: 3.5: 0.45; the content of $\gamma$-Al$_2$O$_3$ is 0.01wt%; the total content of AlO(OH), $\chi$-Al$_2$O$_3$ and $\eta$-Al$_2$O$_3$ is 79.99wt% | 48 |
| D6 | $\gamma$-Al$_2$O$_3$ | 5 |

Note: in Table 1, the percentage of macropores refers to the percentage of a sum of pore volumes of pores having a pore diameter of larger than 75nm in a total of pore volumes of the catalyst; the percentage by weight of the phases is based on the total weight of the catalyst.

Test Examples

The catalysts S1-S7 and D1-D6 prepared in Examples 1-7 and Comparative Examples 1-6 were subjected to the COS conversion tests on a 10mL micro-reaction activity evaluation device to evaluate the properties of the catalysts respectively, the method was as follows:

Aging treatment: the catalysts S1-S7 and D1-D6 were subjected to a severe aging process (the catalysts were calcined at 550°C for 2h, followed by an aging treatment with water vapor at an hourly volumetric space velocity of 1,000h$^{-1}$) respectively, to rapidly simulate a state of the catalysts after a long period of use. According to the above conditions, aging treatment of the catalysts with water vapor was performed for 8h, 12h, and 16h respectively, and the gained catalysts after the severe aging process can simulate properties of the catalysts when used for 4, 6, and 8 years respectively.

COS conversion test: the reactor of the micro-reaction activity evaluation device was made of stainless steel tubes with an inside diameter of 20mm, and was placed in a thermotank, the specific process flow was as shown in FIG. 4. The loading amount of the catalysts after severe aging process was 10mL/(20-40 mesh), and the quartz sand of the same particle size was loaded on the upper part and subjected to the mixing and preheating process. The content of $H_2S$ and COS in the inlet and outlet gases of the reactor was analyzed online by using a GC-2014 gas chromatograph manufactured by the Shimadzu Corporation in Japan, a TCD detector was used for analyzing a constant amount of sulfide, GDX-301 was used as a supporter, the column temperature was 120°C, hydrogen gas was used as a carrier gas, and the post-column flow rate was 25mL/min; a FPD detector was used for analyzing a trace amount of sulfide, GDX-301 was used as a supporter, the column temperature was 80°C, nitrogen gas was used as a carrier gas, and the post-column flow rate was 30mL/min.

The composition of the reactor inlet raw natural gas: $CH_4$ in an amount of 91.49v%, ethane in an amount of 0.5v%, $H_2$ in an amount of 0.01v%, $CO_2$ in an amount of 3v%, water vapor in an amount of 5v%, $H_2S$ in an amount of 50mg/m$^3$, methyl mercaptan in an amount of 11mg/m$^3$, COS in an amount of 500mg/m$^3$; the volumetric space velocity of the raw natural gas was 5,000h$^{-1}$, the reaction temperature was 130°C, the reaction time was 24h, and the product at the reactor outlet was separated to obtain the product natural gas and $H_2S$. The COS conversion rate and the total sulfur content of the product natural gas were tested every 1h from the beginning of the reaction, until the end of the experiment, and an average value of the individual test results was taken as the final result, the results were as shown in Table 2. The COS conversion rate was calculated according to equation (I).

$$\eta_{COS} = \frac{M_0 - M_1}{M_0} \times 100\% \qquad (I)$$

In equation (I), $M_0$, and $M_1$ denoted the volumetric concentration of COS at the inlet and outlet, respectively.

Table 2

| Catalysts | COS conversion rate /% (catalysts used for 4 years) | COS conversion rate /% (catalysts used for 6 years) | COS conversion rate /% (catalysts used for 8 years) | Total sulfur content in the product natural gas /mg/m$^3$ (catalysts used for 8 years) |
|---|---|---|---|---|
| S1 | 99.7 | 99.6 | 99.5 | 13.5 |
| S2 | 99.7 | 99.5 | 99.4 | 14.0 |
| S3 | 99.7 | 99.4 | 99.3 | 14.5 |
| S4 | 99.6 | 99.4 | 99.2 | 15.0 |
| S5 | 99.5 | 99.3 | 99.0 | 16.0 |
| S6 | 99.3 | 99.1 | 98.9 | 16.5 |
| S7 | 99.0 | 98.7 | 98.5 | 20.0 |
| D1 | 98.5 | 95.3 | 93.4 | 44.0 |
| D2 | 90.2 | 87.4 | 84.1 | 90.5 |
| D3 | 56.0 | 55.8 | 55.2 | 235.0 |
| D4 | 25.0 | 24.8 | 24.1 | 390.5 |
| D5 | 95.2 | 92.1 | 90.4 | 59.0 |
| D6 | 36.0 | 35.1 | 34.2 | 340.0 |

As can be seen from Table 2, the COS conversion rates of the catalysts SI-S7 provided by the present disclosure when used for 4 years can reach 99% or higher, and the COS conversion rates of the catalysts SI-S7 when used for 8 years can still be higher than 98.5%, thus the catalysts exhibit excellent carbonyl sulfide conversion activity, the activity stability is excellent, the activity attenuation after use for a long time is small, the service life is over 8 years, the catalysts are applicable to the low reaction temperature (e.g., the reaction temperature 130°C adopted in the above test), and can desirably satisfy the industrial plant requirements for removing the carbonyl sulfide, such that a total sulfur content in the product natural gas gained after desulfurization is less than 20mg/m$^3$, satisfying the requirements of Category I gas stipulated in the National Standard GB17820-2018 of China. In contrast, the carbonyl sulfide conversion activity of the catalysts D1-D6 is obviously lower, and the service life of the catalysts is significantly shorter.

The present disclosure can produce synergy by designing the composition of catalysts and taking advantage of the interaction of the specific amount of alkali metal oxide and nickel oxide as well as the specific phases of the carrier, such that the catalysts have the advantages of high catalytic activity, good activity stability, long service life and low reaction temperature, and can achieve a COS conversion rate of higher than or equal to 99%, and a service life of 8 years or above.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

**Claims**

1. A catalyst for removing carbonyl sulfide in natural gas comprising a carrier, and an alkali metal oxide and nickel oxide which are loaded on the carrier; wherein the content of the carrier is within the range of 90-97wt%, the content of the alkali metal oxide is within the range of 2-6wt%, and the content of the nickel oxide is within the range of 1-4wt%, based on the total weight of the catalyst; at least part of the carrier is AlO(OH), $\chi$-Al$_2$O$_3$ and $\eta$-Al$_2$O$_3$ phases;

   wherein the weight ratio of AlO(OH): $\chi$-Al$_2$O$_3$: $\eta$-Al$_2$O$_3$ in the carrier is 1: (2-5): (0.2-0.6) ;
   the contents of AlO(OH), $\chi$-Al$_2$O$_3$ and $\eta$-Al$_2$O$_3$ are calculated based on the peak areas of the characteristic diffraction peaks subjected to an XRD test.

2. The catalyst of claim 1, wherein the content of the carrier is within the range of 93-95wt%, the content of the alkali metal oxide is within the range of 3-4wt%, and the content of the nickel oxide is within the range of 2-3wt%, based on the total weight of the catalyst.

3. The catalyst of claim 1 or 2, wherein the content of the alkali metal oxide in the catalyst is higher than the content of the nickel oxide, preferably, the content of the alkali metal oxide is 0.5-3wt% higher than the content of the nickel oxide.

4. The catalyst of claim 3, wherein the weight ratio of AlO(OH): $\chi$-Al$_2$O$_3$: $\eta$-Al$_2$O$_3$ in the carrier is 1: (3-4): (0.4-0.5); preferably, the content of $\gamma$-Al$_2$O$_3$ in the catalyst is not more than 0.5wt%, and total content of AlO(OH), $\chi$-Al$_2$O$_3$ and $\eta$-Al$_2$O$_3$ is not less than 90wt%, based on the total weight of the catalyst.

5. The catalyst of claim 3 or 4, wherein the alkali metal oxide is an oxide of sodium and/or an oxide of potassium.

6. The catalyst of any one of claims 1-5, wherein the catalyst has a specific surface area of more than 300m$^2$/g and a pore volume of more than 0.45mL/g; the specific surface area is measured by the nitrogen adsorption method, and the pore volume is measured by the mercury intrusion method;
   preferably, the catalyst has a content of weakly alkaline centers from 2.15 to 2.3 mmol CO$_2$/g catalyst; the content of weakly alkaline centers is measured by using the carbon dioxide temperature programmed desorption method (CO$_2$-TPD) on the amount of CO$_2$ with the desorption temperature below 200°C in the CO$_2$-TPD pattern obtained by testing the catalyst.

7. The catalyst of any one of claims 1-6, wherein in the pore structure of the catalyst measured by the mercury intrusion method, a sum of pore volumes of pores having a pore diameter of larger than 75nm is 35vol% or more, based on a total of pore volumes of the catalyst.

8. The catalyst of claim 7, wherein a sum of pore volumes of pores having a pore diameter of larger than 75nm is within the range of 35-55vol%, based on a total of pore volumes of the catalyst.

**9.** A use of the catalyst of any one of claims 1-8 in removing a carbonyl sulfide.

**10.** A method for removing carbonyl sulfide in natural gas comprising:

contacting the raw natural gas with a desulfurizer and carrying out a reaction, then performing a separation to obtain the product natural gas and $H_2S$;

wherein the desulfurizer is the catalyst of any one of claims 1-8;

the reaction conditions comprise an hourly volumetric space velocity of the raw natural gas within the range of 1,000-5,000h$^{-1}$ and a reaction temperature within the range of 100-140°C.

**Patentansprüche**

**1.** Katalysator zum Entfernen von Carbonylsulfid aus Erdgas, umfassend einen Träger und ein Alkalimetalloxid und Nickeloxid, die auf den Träger aufgebracht sind; wobei der Gehalt des Trägers im Bereich von 90-97 Gew.-% liegt, der Gehalt des Alkalimetalloxids im Bereich von 2-6 Gew.-% liegt und der Gehalt des Nickeloxids im Bereich von 1-4 Gew.-% liegt, bezogen auf das Gesamtgewicht des Katalysators; mindestens ein Teil des Trägers aus AlO(OH), $\chi$-$Al_2O_3$- und $\eta$-$Al_2O_3$-Phasen besteht;

wobei das Gewichtsverhältnis von AlO(OH): $\chi$-$Al_2O_3$ $\eta$-$Al_2O_3$ in dem Träger 1:(2-5): (0,2-0,6) beträgt;

die Gehalte an AlO(OH), $\chi$-$Al_2O_3$ und $\eta$-$Al_2O_3$ auf der Grundlage der Peakflächen der charakteristischen Beugungspeaks berechnet werden, die einer XRD-Prüfung unterzogen wurden.

**2.** Katalysator gemäß Anspruch 1, wobei der Gehalt des Trägers im Bereich von 93-95 Gew.-% liegt, der Gehalt des Alkalimetalloxids im Bereich von 3-4 Gew.-% liegt und der Gehalt des Nickeloxids im Bereich von 2-3 Gew.-% liegt, bezogen auf das Gesamtgewicht des Katalysators.

**3.** Katalysator gemäß Anspruch 1 oder 2, wobei der Gehalt an Alkalimetalloxid in dem Katalysator höher ist als der Gehalt an Nickeloxid, vorzugsweise der Gehalt an Alkalimetalloxid um 0,5-3 Gew.-% höher ist als der Gehalt an Nickeloxid.

**4.** Katalysator gemäß Anspruch 3, wobei das Gewichtsverhältnis von AlO(OH): $\chi$-$Al_2O_3$: $\eta$-$Al_2O_3$ im Träger 1:(3-4):(0,4-0,5) beträgt;

vorzugsweise der Gehalt an $\gamma$-$Al_2O_3$ in dem Katalysator nicht mehr als 0,5 Gew.-% beträgt und der Gesamtgehalt an AlO(OH), $\chi$-$Al_2O_3$ und $\eta$-$Al_2O_3$ nicht weniger als 90 Gew.-% beträgt, bezogen auf das Gesamtgewicht des Katalysators.

**5.** Katalysator gemäß Anspruch 3 oder 4, wobei das Alkalimetalloxid ein Oxid von Natrium und/oder ein Oxid von Kalium ist.

**6.** Katalysator gemäß mindestens einem der Ansprüche 1-5, wobei der Katalysator eine spezifische Oberfläche von mehr als 300 m$^2$/g und ein Porenvolumen von mehr als 0,45 ml/g aufweist; die spezifische Oberfläche durch das Stickstoffadsorptionsverfahren gemessen wird und das Porenvolumen durch das Quecksilberintrusionsverfahren gemessen wird;

vorzugsweise der Katalysator einen Gehalt an schwach alkalischen Zentren von 2,15 bis 2,3 mmol $CO_2$/g Katalysator aufweist; der Gehalt an schwach alkalischen Zentren unter Verwendung des Kohlendioxid-temperaturprogrammierten Desorptionsverfahrens ($CO_2$-TPD) an der Menge an $CO_2$ mit einer Desorptionstemperatur unter 200 °C in dem $CO_2$-TPD-Muster gemessen wird, das durch Testen des Katalysators erhalten wird.

**7.** Katalysator gemäß mindestens einem der Ansprüche 1-6, wobei in der durch das Quecksilberintrusionsverfahren gemessenen Porenstruktur des Katalysators die Summe der Porenvolumina von Poren mit einem Porendurchmesser von mehr als 75 nm 35 Vol.-% oder mehr beträgt, bezogen auf die Gesamtporenvolumina des Katalysators.

**8.** Katalysator gemäß Anspruch 7, wobei die Summe der Porenvolumina von Poren mit einem Porendurchmesser von mehr als 75 nm im Bereich von 35-55 Vol.-% liegt, bezogen auf die Gesamtporenvolumina des Katalysators.

**9.** Verwendung des Katalysators gemäß mindestens einem der Ansprüche 1 bis 8 zum Entfernen von Carbonylsulfid.

**10.** Verfahren zum Entfernen von Carbonylsulfid aus Erdgas, umfassend: Inkontaktbringen des Roherdgases mit einem Entschwefler und Durchführen einer Reaktion, dann Durchführen einer Trennung, um das Produkt Erdgas und H$_2$S zu erhalten;

wobei der Entschwefler der Katalysator gemäß mindestens einem der Ansprüche 1 bis 8 ist; die Reaktionsbedingungen eine stündliche Volumenraumgeschwindigkeit des Roherdgases im Bereich von 1.000-5.000 h$^{-1}$ und eine Reaktionstemperatur im Bereich von 100-140 °C umfassen.

**Revendications**

**1.** Catalyseur pour éliminer le sulfure de carbonyle dans le gaz naturel, comprenant un support et un oxyde de métal alcalin et un oxyde de nickel qui sont chargés sur le support ; dans lequel la teneur en support est comprise dans la plage de 90 à 97 % en poids, la teneur en oxyde de métal alcalin est comprise dans la plage de 2 à 6 % en poids et la teneur en oxyde de nickel est comprise dans la plage de 1 à 4 % en poids, par rapport au poids total du catalyseur ; au moins une partie du support est constituée de phases AlO(OH), $\chi$-Al$_2$O$_3$ et $\eta$-Al$_2$O$_3$ ;

dans lequel le rapport pondéral AlO(OH):$\chi$-Al$_2$O$_3$:$\eta$-Al$_2$O$_3$ dans le support est de 1:(2-5):(0,2-0,6) ; les teneurs en AlO(OH), $\chi$-Al$_2$O$_3$ et $\eta$-Al$_2$O$_3$ sont calculées sur la base des aires des pics de diffraction caractéristiques soumis à un test XRD.

**2.** Le catalyseur selon la revendication 1, dans lequel la teneur en support est dans la plage de 93 à 95 % en poids, la teneur en oxyde de métal alcalin est dans la plage de 3 à 4 % en poids et la teneur en oxyde de nickel est dans la plage de 2 à 3 % en poids, sur la base du poids total du catalyseur.

**3.** Le catalyseur selon la revendication 1 ou 2, dans lequel la teneur en oxyde de métal alcalin dans le catalyseur est supérieure à la teneur en oxyde de nickel, de préférence, la teneur en oxyde de métal alcalin est supérieure de 0,5 à 3 % en poids à la teneur en oxyde de nickel.

**4.** Le catalyseur selon la revendication 3, dans lequel le rapport pondéral AlO(OH):$\chi$-Al$_2$O$_3$:$\eta$-Al$_2$O$_3$ dans le support est de 1:(3-4):(0,4-0,5) ; de préférence, la teneur en $\gamma$-Al$_2$O$_3$ dans le catalyseur n'est pas supérieure à 0,5 % en poids, et la teneur totale en AlO(OH), $\chi$-Al$_2$O$_3$ et $\eta$-Al$_2$O$_3$ n'est pas inférieure à 90 % en poids, par rapport au poids total du catalyseur.

**5.** Le catalyseur selon la revendication 3 ou 4, dans lequel l'oxyde de métal alcalin est un oxyde de sodium et/ou un oxyde de potassium.

**6.** Le catalyseur selon l'une quelconque des revendications 1 à 5, dans lequel le catalyseur a une surface spécifique supérieure à 300 m$^2$/g et un volume poreux supérieur à 0,45 ml/g ; la surface spécifique est mesurée par la méthode d'adsorption d'azote, et le volume poreux est mesuré par la méthode d'intrusion de mercure ; de préférence, le catalyseur a une teneur en centres faiblement alcalins de 2,15 à 2,3 mmol de CO$_2$/g de catalyseur ; la teneur en centres faiblement alcalins est mesurée à l'aide de la méthode de désorption programmée en température du dioxyde de carbone (CO$_2$-TPD) sur la quantité de CO$_2$ avec une température de désorption inférieure à 200°C dans le profil CO$_2$-TPD obtenu en testant le catalyseur.

**7.** Le catalyseur selon l'une quelconque des revendications 1 à 6, dans lequel, dans la structure poreuse du catalyseur mesurée par la méthode d'intrusion du mercure, la somme des volumes des pores ayant un diamètre supérieur à 75 nm est de 35 % en volume ou plus, par rapport au volume total des pores du catalyseur.

**8.** Le catalyseur selon la revendication 7, dans lequel la somme des volumes des pores ayant un diamètre supérieur à 75 nm est dans la plage de 35 à 55 % en volume, par rapport au volume total des pores du catalyseur.

**9.** Utilisation du catalyseur selon l'une quelconque des revendications 1 à 8 pour éliminer le sulfure de carbonyle.

**10.** Procédé pour éliminer le sulfure de carbonyle dans le gaz naturel, comprenant : la mise en contact du gaz naturel brut avec un désulfurateur et la réalisation d'une réaction, puis la réalisation d'une séparation pour obtenir le gaz naturel produit et le H2S ;

dans lequel le désulfurateur est le catalyseur de l'une quelconque des revendications 1 à 8 ;
les conditions de réaction comprennent une vitesse spatiale volumétrique horaire du gaz naturel brut dans la plage de 1000 à 5000 h$^{-1}$ et une température de réaction dans la plage de 100 à 140°C.

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 1069673 A
- CN 108970618 B
- US 4511668 A
- US 20110014105 A1